# EUROPEAN PATENT APPLICATION

(11) **EP 4 711 624 A1**
(43) Date of publication of application: **18.03.2026**
(21) Application number: 24802867.2
(22) Date of filing: 30.04.2024
(51) Int. Cl.: F04D 29/66, H02K 5/24, B08B 13/00, F04D 29/42, F04D 29/00

(54) **POWER ASSEMBLY AND SURFACE-CLEANING DEVICE**

(30) Priority: 06.05.2023 CN 202310506113
(71) Applicant: Shenzhen Roborock Innovation Technology Co., Ltd., Shenzhen, Guangdong 518000 (CN)
(72) Inventor: DU, Shoupeng, Shenzhen, Guangdong 518000 (CN); LIANG, Binxiong, Shenzhen, Guangdong 518000 (CN); WEI, Xianzhi, Shenzhen, Guangdong 518000 (CN); JIN, Tenglong, Shenzhen, Guangdong 518000 (CN); YU, Mochen, Shenzhen, Guangdong 518000 (CN); ZHOU, Yongfei, Shenzhen, Guangdong 518000 (CN)
(74) Representative: advotec.
(86) International application number: PCT/CN2024/090826
(87) International publication number: WO 2024/230585

(57) **Abstract**

Disclosed are a power assembly (100) and a surface-cleaning device. The power assembly (100) comprises: a power source (20) configured to provide fluid power; and a silencing cavity (34) arranged around the power source (20) and provided with an axial depth and a radial depth. The radial depth is configured for silencing in a first frequency range, and the axial depth is configured for silencing in a second frequency range; the axial depth is at least 20 mm but not greater than 120 mm.

## Description

### CROSS-REFERENCE TO RELATED APPLICATION

The present application claims priority to Chinese Patent Application No. 202310506113.8, filed on May 6, 2023 to the Chinese Patent Office and entitled "POWER ASSEMBLY AND SURFACE CLEANING DEVICE", which is incorporated herein by reference in its entirety.

### TECHNICAL FIELD

The present application relates to the technical field of cleaning devices, and in particular, to a power assembly and a surface cleaning device.

### BACKGROUND ART

In recent years, with the development of science and technology, a variety of cleaning products have been emerging. These cleaning products relieve the burden of people in cleaning and sweeping, meet the needs of people and provide great convenience for people's lives.

A negative-pressure fan will produce noise during its working process. Conventional fan noise reduction methods include vibration reduction with soft rubber, sound absorption with sound-absorbing cotton, etc. These methods have limited noise reduction effects and still produce sharp noise, thereby affecting the user experience.

### SUMMARY OF THE APPLICATION

An objective of the present application is to provide a power assembly and a surface cleaning device, which can reduce noise of a fan in the power assembly.

An embodiment of the present application provides a power assembly. The power assembly includes:
a power source, configured to provide fluid power; and
a silencing cavity, arranged around the power source, the silencing cavity having an axial depth and a radial depth, wherein the radial depth is configured to eliminate noise within a first frequency range, and the axial depth is configured to eliminate noise within a second frequency range; and
wherein the axial depth is at least 20 mm but not more than 120 mm.

In some embodiments, the power assembly further includes:
a silencing hood, arranged around the power source, the silencing hood including a perforated plate and an outer wall, wherein the silencing cavity is located between the perforated plate and the outer wall.

In some embodiments, a diameter of each hole in the perforated plate is at least 1 mm but not more than 5 mm.

In some embodiments, the quantity of holes in the perforated plate is at least 100 but not more than 1400.

In some embodiments, a distance between the perforated plate and a central axis of the silencing hood is at least 20 mm but not more than 55 mm.

In some embodiments, the thickness of the perforated plate is at least 1 mm but not more than 4 mm.

In some embodiments, the radial depth of the silencing cavity is at least 3 mm but not more than 15 mm.

In some embodiments, a cross section of the silencing cavity is of a U-shaped structure.

In some embodiments, the bottom of the U-shaped structure has no silencing holes.

In some embodiments, the silencing hood further includes:
an assembling bracket, arranged on the inner side of the perforated plate, and configured to fix the silencing hood through the assembling bracket.

In some embodiments, the first frequency range is at least 3000 Hz but not more than 8000 Hz, and the second frequency range is at least 500 Hz but not more than 3200 Hz.

In some embodiments, a rotating speed of the power source is at least 70000 r/min but not more than 90000 r/min.

In some embodiments, a plurality of holes in the perforated plate is evenly distributed in the perforated plate.

An embodiment of the present application provides a surface cleaning device. The surface cleaning device includes the power assembly according to any one of the above embodiments.

An embodiment of the present application provides a power assembly. The power assembly includes:
a housing, the housing including an air outlet and a water outlet;
a power source, located inside the housing and configured to provide fluid power; and
a silencing hood, arranged between the power source and the housing, the silencing hood including a perforated plate and an outer wall, wherein
water vapor in a working airflow condenses into liquid on the perforated plate and/or the outer wall and the liquid is discharged from the water outlet, and the working airflow except the condensed liquid is discharged from the air outlet.

In some embodiments, the air outlet is located on a side surface of the housing, and the water outlet is located on a bottom surface of the housing.

In some embodiments, the power assembly further includes:
a first air channel, communicating an exhaust port of a fan to bottom of the silencing hood; and
a second air channel, communicating the bottom of the silencing hood to the air outlet of the housing, wherein
the working airflow flows, in response to the power source being turned on, through the power source, the first air channel, the second air channel and the air outlet in sequence and is then discharged.

In some embodiments, the first air channel includes:
a path starting from the exhaust port of the fan and extending down along an inner wall of the perforated plate to the bottom of the silencing hood.

In some embodiments, the first air channel includes:
a path starting from the exhaust port of the fan, entering along the perforated plate a space between the perforated plate and the outer wall, turning back via the outer wall to get out of the perforated plate, and then extending down along the inner wall of the perforated plate to the bottom of the silencing hood.

In some embodiments, the second air channel includes:
a path extending from the bottom of the silencing hood upward along a periphery of the outer wall to the air outlet of the housing.

In some embodiments, the perforated plate and the outer wall form a communicated structure having a U-shaped cross section.

In some embodiments, a bottom surface of the U-shaped communicated structure includes at least one water outlet hole.

In some embodiments, the silencing hood further includes:
a hollowed-out assembling bracket, arranged on the inner side of the perforated plate and configured to allow a working airflow or condensed water to pass through.

An embodiment of the present application provides a surface cleaning device. The surface cleaning device includes the power assembly according to any one of the above embodiments.

### BRIEF DESCRIPTION OF THE DRAWINGS

The accompanying drawings herein are incorporated into the description and constitute a part of the present description, show embodiments that are consistent with the present application, and are used together with the description to explain the principles of the present application. Apparently, the accompanying drawings in the following description show merely some embodiments of the present application, and a person of ordinary skill in the art may still derive other drawings from these accompanying drawings without creative efforts. In drawings:
FIG. 1 is a schematic diagram of an overall structure of a power assembly according to some embodiments of the present application;
FIG. 2 is a schematic structural diagram of a cross section of the power assembly according to some embodiments of the present application;
FIG. 3 is a schematic structural diagram of a water flow path of the power assembly according to some embodiments of the present application;
FIG. 4 is a schematic structural diagram of a water flow path of the power assembly according to some other embodiments of the present application;
FIG. 5 is a schematic structural diagram of an air channel path of the power assembly according to some embodiments of the present application;
FIG. 6 is a schematic structural diagram of an air channel path of the power assembly according to some other embodiments of the present application;
FIG. 7 is a schematic diagram of an overall structure of a silencing hood according to some embodiments of the present application;
FIG. 8 is a schematic structural diagram of a cross section of the silencing hood according to some embodiments of the present application; and
FIG. 9 is a schematic structural diagram of a cross section of a silencing cavity according to some embodiments of the present application.

### Description of the reference numbers:

100-power assembly; 10-housing; 11-air outlet; 12-water outlet; 20-power source; 21-intake port; 22-exhaust port; 30-silencing hood; 31-perforated plate; 32-outer wall; 311-through hole; 312-water outlet hole; 313-assembling bracket; and 34-silencing cavity.

### DETAILED DESCRIPTION

To make the objectives, technical solutions and advantages of the present application clearer, the present application will be described in detail below in conjunction with the accompanying drawings. Of course, the described embodiments are merely some embodiments, rather than all embodiments, of the present application. Based on the embodiments in the present application, all other embodiments derived by a person of ordinary skill in the art without creative efforts shall fall within the protection scope of the present application.

The terms used in the embodiments of the present application are for the purpose of describing particular embodiments only and are not intended to limit the present application. The singular forms "a/an", "the" and "this" used in the embodiments of the present application and the appended claims are intended to include the plural forms as well, unless otherwise indicated clearly in the context. The term "a plurality of" generally means including at least two.

It is to be understood that, the term "and/or" used herein only describes an association relationship between associated objects, and indicates that there may be three kinds of relationships. For example, A and/or B may indicate three cases: A exists alone, A and B exist at the same time, and B exists alone. In addition, the character "/" herein generally indicates an "or" relationship between the contextual objects.

It should be understood that, although the terms "first", "second", "third", etc. may be used to describe in the embodiments of the present application, these should not be limited to these terms. These terms are only used for a distinguishing purpose. For example, "first" may also be referred to as "second" without departing from the scope of the embodiments of the present application. Similarly, "second" may also be referred to as "first".

It should also be noted that, the terms "comprising/including", "containing", or any other variants are intended to cover the nonexclusive inclusion, such that a commodity or apparatus including a series of elements includes not only those elements, but also other elements not listed explicitly or elements inherent to such a commodity or apparatus. Without more limitations, the element defined by the phrase "comprising/including a ..." does not exclude the existence of other same elements in the commodity or apparatus including said element.

Optional embodiments of the present application are described in detail below with reference to the accompanying drawings.

A main unit assembly of the surface cleaning device provides suction power for working of the cleaning device, and a working airflow may enter the main unit assembly and is then discharged. In this process, some water vapor will enter the main unit assembly along with the working airflow. In related technologies, water vapor may be discharged from an air outlet of a main unit assembly along with a working airflow, but sometimes cannot be discharged cleanly, resulting in some water vapor being deposited in the main unit assembly, which will affect the service life of the main unit assembly after accumulating for a long time.

An embodiment of the present application provides a power assembly. The power assembly includes: a housing, the housing including an air outlet and a water outlet; a power source, located inside the housing and configured to provide working fluid power; and a silencing hood, arranged between the power source and the housing, the silencing hood including a perforated plate and an outer wall, wherein a working airflow carrying water vapor condenses into liquid on the perforated plate and/or the outer wall and the liquid is then discharged from the water outlet.

The power assembly according to the embodiment of the present application has a drainage path and an exhaust path. After the working airflow enters from an intake port of the fan, water contained in the working airflow condenses on the perforated plate of the silencing hood and/or the outer wall of the silencing hood, flows down along the wall surface under the action of gravity, and then flows out of the water outlet, while a separated gas is discharged from the air outlet. Therefore, the power assembly can perform water/gas separation on the working airflow entering the fan, and at the same time discharge gas and water out of the power assembly, thereby optimizing the use of the power assembly.

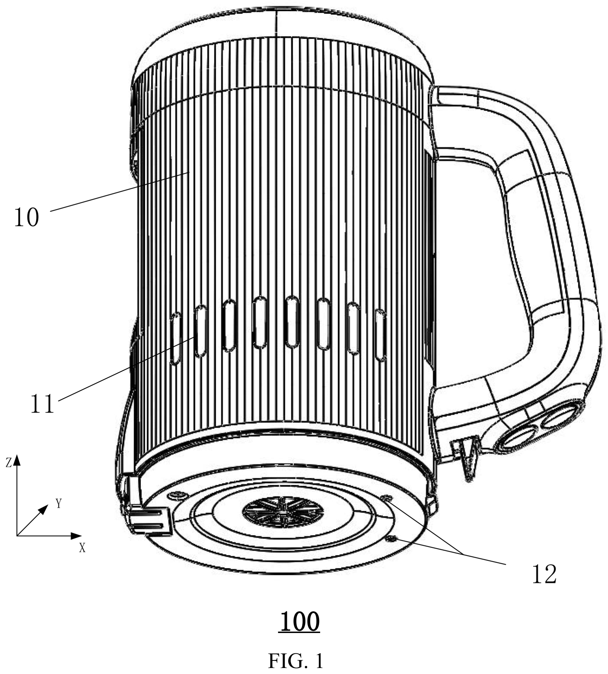

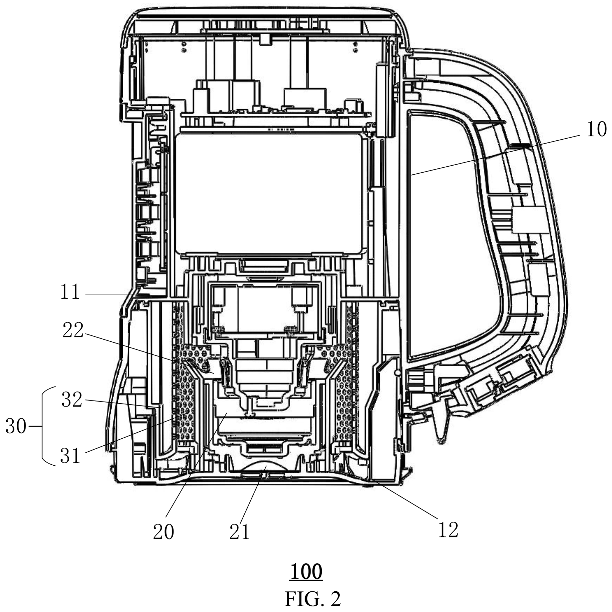

Specifically, an embodiment of the present application provides a power assembly. As an example, FIG. 1 is a schematic diagram of an overall structure of a power assembly according to some embodiments of the present application; and FIG. 2 is a schematic structural diagram of a cross section of the power assembly according to some embodiments of the present application.

In order to describe a behavior of the power assembly more clearly, as shown in FIG. 1, the following directions are defined: the power assembly may be calibrated by defining the following three mutually perpendicular axes: a transverse axis Y, a front-rear axis X and a central vertical axis Z. The central vertical axis Z is in an axial direction of the power assembly, a direction perpendicular to the axial direction is a radial direction, and the radial direction is located in an XY plane. A direction opposite to an arrow of the front-rear axis X is marked as "backward", and a direction along the arrow of the front-rear axis X is marked as "forward". A direction along an arrow of the transverse axis Y is a "left side" of the power assembly, and a direction opposite to the arrow of the transverse axis Y is a "right side" of the power assembly. The vertical axis Z is in a direction extending upward from a bottom surface of the power assembly, with a direction along an arrow of the vertical axis Z being an "upper side" of the power assembly, and a direction opposite to the arrow of the vertical axis Z being a "lower side" of the power assembly.

Specifically, as shown in FIG. 1 and FIG. 2, an embodiment of the present application provides a power assembly 100. The power assembly 100 is configured to provide power for cleaning work. The power assembly 100 includes a housing 10, and the housing 10 may be columnar (e.g., cylindrical). The housing 10 includes an air outlet 10 and a water outlet 12. The air outlet 11 is configured to discharge a basically dry airflow in the working airflow. The water outlet 12 is configured to discharge water vapor mixed in the working airflow. The power assembly 100 further includes a power source 20. The power source 20 is located inside the housing 10 and configured to provide fluid power. The power source 20 may specifically be a suction source, such as a fan. The power source 20 is provided with an intake port 21 and an exhaust port 22. The power assembly 100 further includes a silencing hood 30. The silencing hood 30 is arranged between the power source 20 and the housing 10. The silencing hood 30 is configured to reduce noise generated during the flowing of the working airflow. The silencing hood 30 includes a perforated plate 31 and an outer wall 32. The working airflow carrying water vapor condenses into liquid on the perforated plate 31 and/or the outer wall 32 and the liquid is discharged from the water outlet 12, and the working airflow except the condensed liquid is discharged from the air outlet 11. The condensed water can be discharged from the water outlet in time, so that the power assembly is basically always in a state of no residual water, which can prolong the service life of the power assembly and avoid pollution to an environment caused by sewage discharged from the air outlet.

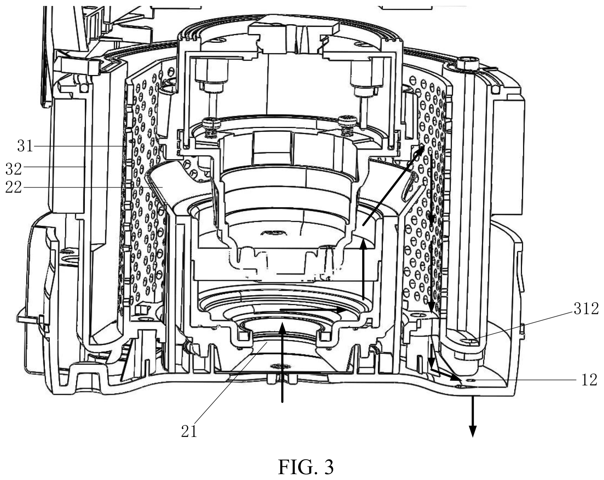

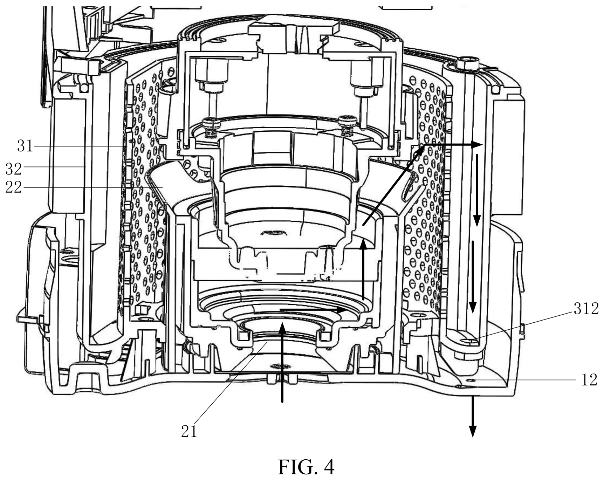

FIG. 3 is a schematic structural diagram of a water flow path of the power assembly according to some embodiments of the present application; and FIG. 4 is a schematic structural diagram of a water flow path of the power assembly according to some other embodiments of the present application. As shown in FIG. 3, the arrows in FIG. 3 approximately represent a flowing direction of the working airflow. The working airflow carrying water vapor enters from the intake port 21 of the power source 20 and is discharged from the exhaust port 22 of the power source 20. When the working airflow is low in strength, the working airflow is blocked by the perforated plate 31; and the working airflow carrying water vapor condenses into liquid on the perforated plate 31, then the liquid flows down along the perforated plate 31, and is finally discharged from the water outlet 12 on the bottom surface of the housing 10. As shown in FIG. 4, the arrows in FIG. 4 approximately represent a flowing direction of the working airflow. The working airflow carrying water vapor enters from the intake port 21 of the power source 20 and is discharged from the exhaust port 22 of the power source 20. When the working airflow is high enough in strength, the working airflow passes through the perforated plate 31 and is blocked by the outer wall 32; and the working airflow carrying water vapor condenses into liquid on the outer wall 32, then the liquid flows down along the outer wall 32, and is finally discharged from the water outlet 12 on the bottom surface of the housing 10. In some embodiments, the working airflow carrying water vapor partially flows down along the perforated plate 31 and partially along the outer wall 32, both of which condense into liquids and then the liquids are discharged from the water outlet 12 on the bottom surface of the housing 10.

In some embodiments, as shown in FIG. 1, the air outlet 11 of the housing 10 is located on a side surface of the housing. Optionally, the air outlet 11 is located at a position with a preset height from the bottom surface of the housing 10, such as 1/3 of the height of the housing, thereby preventing impurities from entering the housing due to too low height of the air outlet. Meanwhile, the water outlet 12 is located on the bottom surface of the housing 10, and a water flow is condensed and aggregates on the perforated plate 31 and/or the outer wall 32 and is discharged from the water outlet 12 on the bottom surface of the housing, so as to avoid water accumulation in the housing. A plurality of air outlets 11 is provided. A shape of each air outlet 11 is of a strip structure approximately extending along the axial direction, such as a rectangular structure, a runway-shaped structure or an oval structure. An air outlet of the strip structure is consistent with the flowing direction of the working airflow, which is more conducive to the discharge of the airflow.

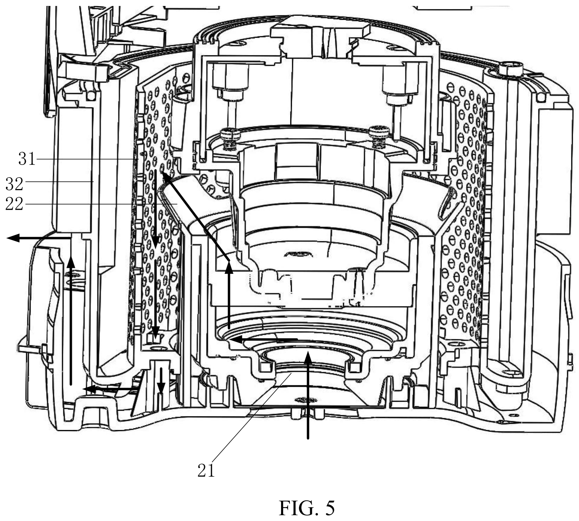

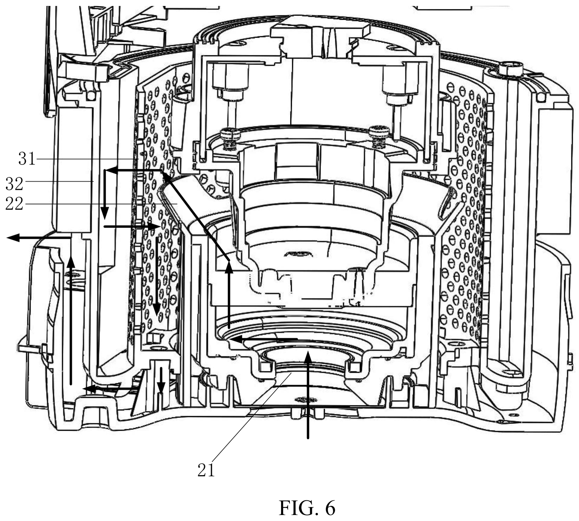

FIG. 5 is a schematic structural diagram of an air channel path of the power assembly according to some embodiments of the present application; and FIG. 6 is a schematic structural diagram of an air channel path of the power assembly according to some other embodiments of the present application. In some embodiments, as shown in FIG. 5, the arrows in FIG. 5 approximately represent the flowing direction of the working airflow. The power assembly 100 further includes a first air channel. The first air channel communicates the exhaust port 22 of the fan with the bottom of the silencing hood 30. A hollowed-out structure is provided between the bottom of the silencing hood 30 and the bottom surface of the housing. The hollowed-out structure may allow the working airflow to pass through. In this embodiment, the first air channel means a path through which the airflow passes from the exhaust port 22 of the fan to the bottom of the silencing hood 30. In some embodiments, as shown in FIG. 5, the first air channel includes a path starting from the exhaust port 22 of the fan and extending down along an inner wall of the perforated plate 31 to the bottom of the silencing hood 30. That is, after the working airflow flows out of the exhaust port of the fan, if the working airflow is not high enough in strength, the working airflow is blocked by the perforated plate, and the working airflow mainly flows down along the inner wall of the perforated plate to the hollowed-out structure at the bottom of the silencing hood. In some embodiments, as shown in FIG. 6, the arrows in FIG. 6 approximately represent the flowing direction of the working airflow. The first air channel further includes a path starting from the exhaust port 22 of the fan, entering along the perforated plate 31 a space between the perforated plate 31 and the outer wall 32, turning back via the outer wall 32 to the perforated plate 31, and then extending down along the inner wall of the perforated plate 31 to the bottom of the silencing hood 30. In other words, after the airflow is blown out from the exhaust port 22 of the fan, if the airflow is high enough in strength, the airflow will enter the space between the perforated plate 31 and the outer wall 32 from holes in the perforated plate 31, and is then reflected by the outer wall 32; and the airflow turns back into the perforated plate 31 after moving along the outer wall 32 by a certain distance, and then extends down along the inner wall of the perforated plate 31 to the bottom of the silencing hood 30. Optionally, the above two kinds of first air channels do not necessarily exist independently, and sometimes are intersected, while their basic directions are to move downward after flowing out of the air outlet.

The arrows in FIG. 5 and FIG. 6 approximately represent the flowing direction of the working airflow. The power assembly 100 further includes a second air channel. The second air channel communicates the bottom of the silencing hood 30 with the air outlet 11 of the housing 10. Specifically, the second air channel includes a path extending from the bottom of the silencing hood 30 upward along a periphery of the outer wall 32 to the air outlet 11 of the housing 10. After the working airflow reaches the bottom of the silencing hood 30 through the first air channel, it passes through the hollowed-out structure at the bottom of the silencing hood 30 and reaches a gap between the silencing hood 30 and the housing 10. The working airflow moves upward along the gap until it is discharged from the air outlet 11 of the housing 10.

In response to the power source 20 being turned on, the power assembly 100 enables the working airflow to flow through the power source 20, the first air channel, the second air channel and the air outlet 11 in sequence to be discharged, so as to complete discharge of the working airflow that basically does not contain water vapor.

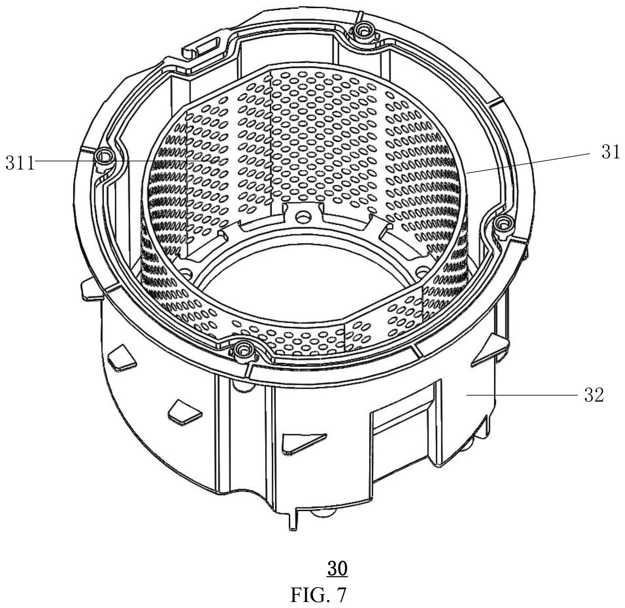

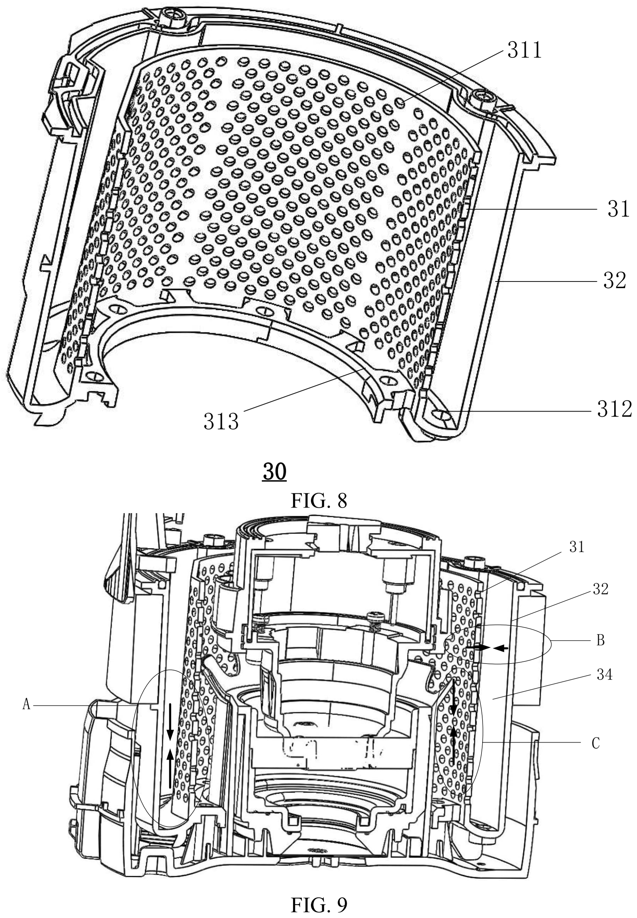

FIG. 7 is a schematic diagram of an overall structure of the silencing hood according to some embodiments of the present application; and FIG. 8 is a schematic structural diagram of a cross section of the silencing hood according to some embodiments of the present application. In some embodiments, as shown in FIG. 7 to FIG. 8, the structure of the silencing hood 30 is approximately a columnar structure. The perforated plate 31 and the outer wall 32 constitute side walls of a double-layer structure. The tops of the side walls of the double-layer structure are of an open structure. The bottom of the perforated plate 31 and the bottom of the outer wall 32 are of a communicated structure, thereby forming a communicated structure having a U-shaped cross section. The perforated plate 31 includes a plurality of through holes 311 for the working airflow to pass through.

In some embodiments, as shown in FIG. 8, a bottom surface of the U-shaped communicated structure includes at least one water outlet hole 312. The working airflow carrying water vapor condenses into liquid on the outer wall 32, then the liquid flows down along the outer wall 32, then flows out of the silencing hood 30 through the water outlet hole 312, reaches the bottom surface of the housing 10, and is then discharged from the water outlet 12.

In some embodiments, as shown in FIG. 8, the silencing hood 30 further includes a hollowed-out assembling bracket 313. The assembling bracket 313 is arranged on the inner side of the perforated plate 31. The silencing hood 30 is assembled to the bottom surface of the housing 10 through the assembling bracket 313. The assembling bracket 313 is of a hollowed-out structure for the working airflow or condensed water to pass through. Optionally, the assembling bracket 313, the perforated plate 31 and the outer wall 32 are integrally formed.

An embodiment of the present application provides a surface cleaning device. The surface cleaning device includes the power assembly according to any one of the above embodiments.

The power assembly according to the embodiment of the present application has a drainage path and an exhaust path. After the working airflow enters from the intake port of the fan, water contained in the working airflow condenses on the perforated plate of the silencing hood and/or the outer wall of the silencing hood, flows down along the wall surface under the action of gravity, and then flows out of the water outlet, while the separated gas is discharged from the air outlet. Therefore, the power assembly can perform water/gas separation on the working airflow entering the fan, and at the same time discharge gas and water out of the power assembly, thereby optimizing the use of the power assembly.

The fan will produce noise during the working process. Conventional fan noise reduction methods include vibration reduction with soft rubber, sound absorption with sound-absorbing cotton, etc. These methods have limited noise reduction effects and still remain sharp noise. In related technologies, a single layer of meshes may be used for silencing, but the silencing with the meshes can only eliminate some noise, and the remaining noise still affects the user experience.

An embodiment of the present application provides a power assembly. The power assembly includes a power source, configured to provide fluid power; and a silencing cavity, arranged around the power source. The silencing cavity has an axial depth and a radial depth. The radial depth is configured to eliminate noise within a first frequency range. The axial depth is configured to eliminate noise within a second frequency range. The axial depth is at least 20 mm but not more than 120 mm.

The power assembly according to the embodiment of the present application is provided with a silencing cavity. The silencing cavity has an axial depth and a radial depth. The axial depth is at least 20 mm but not more than 120 mm. The silencing cavity in the present application can eliminate noise within a range of at least 500 Hz but not more than 3200 Hz through a combination of axial silencing and radial silencing, especially through the silencing cavity structure with an axial depth of at least 20 mm but not more than 120 mm, finally achieving a silencing effect within a range of 500-8000 Hz, which can basically cover a noise frequency of the existing household handheld device, thereby improving the user experience.

Specifically, an embodiment of the present application provides a power assembly 100. The relevant structure of the power assembly 100 is the same as the structure of the above embodiment, and the same structure has the same function and the same technical effect, so some of the contents will not be repeated in this embodiment. As shown in FIG. 1 and FIG. 9, the power assembly 100 includes a housing 10, and the housing 10 may be columnar (e.g., cylindrical). The housing is configured to accommodate related devices, such as a circuit control board. The housing is generally formed from metal, alloy, plastic, or other organic materials. The power assembly 100 further includes a power source 20. The power source 20 is located in the housing 10 and is approximately located on a central axis of the housing 10. The power source 20 is configured to provide working power, so that the working airflow enters from the intake port 21 of the power source 20 and is discharged from the exhaust port 22. The power source 20 may specifically be a suction source, such as a fan. The power source 20 rotates at a certain rotating speed according to adjustable power to output power. For example, the rotating speed of the power source is at least 70000 r/min but not more than 90000 r/min. The power assembly 100 further includes a silencing cavity 34. The silencing cavity 34 is approximately arranged on the central axis, and arranged between the housing 10 and the power source 20 around the power source 20. In a process in which the working airflow is discharged from the exhaust port 22 of the power source 20 to a path of discharge from the air outlet 11 of the housing to the outside of the power assembly 100, the flowing of the working airflow will bring working noise, and the silencing cavity 34 can greatly reduce the noise in this process. Specifically, the silencing cavity 34 has an axial depth and a radial depth. The radial depth is configured to eliminate noise within the first frequency range. The axial depth is configured to eliminate noise within the second frequency range. As an example, the first frequency range is at least 3000 Hz but not more than 8000 Hz, and the second frequency range is at least 500 Hz but not more than 3200 Hz. The axial depth is at least 20 mm but not more than 120 mm. Noise within a range of at least 500 Hz but not more than 3200 Hz can be eliminated through the silencing cavity structure with an axial depth of at least 20 mm but not more than 120 mm, and noise within a range of at least 3000 Hz but not more than 8000 Hz can be eliminated through the radial depth.

In some embodiments, as shown in FIG. 7, the power assembly 100 further includes a silencing hood 30. The silencing hood 30 is arranged around the power source. For example, the silencing hood 30 is arranged between the power source 20 and the housing 10. The silencing hood 30 includes a perforated plate 31 and an outer wall 32. The silencing cavity 34 is located between the perforated plate 31 and the outer wall 32. That is, the silencing hood 30 is of a columnar structure with a double-layer structure, and the silencing cavity is formed between two layers of the double-layer structure. The silencing cavity forms a communicated structure around the central axis. The silencing cavity has an axial depth and a radial depth. The axial depth is approximately a distance from the bottom to the top of the silencing cavity, which is also approximately equivalent to the height of the perforated plate 31 or the outer wall 32. The radial depth is a distance between the perforated plate 31 and the outer wall 32. Holes in the perforated plate 31 are generally evenly distributed on the entire cylindrical surface of the perforated plate 31, which is conducive to the circulation of the working airflow, and is also conducive to the uniform elimination of noise. The holes are basically the same in diameter, which can reduce the difficulty of machining.

In some embodiments, a cross section of the silencing cavity is of a U-shaped structure. The bottom of the U-shaped structure has no silencing holes, but a few water outlet holes only, so that the bottom of the U-shaped structure can have enough sound wave reflection to achieve axial silencing.

The working airflow produced by the power source 20 propagates outward through the perforated plate 31. For the specific airflow propagation path, the above embodiments may be referred to, and will not be repeated here. During the propagation of the airflow, noise of various frequencies will be produced. When sound passes through the perforated plate 31, filtering and silencing can be achieved, that is, sound within a certain frequency range is filtered out. The effect of filtering and silencing is related to the density of the holes (i.e., the number of holes per unit area), the diameters of the holes, and the thickness of the perforated plate. The greater the density of the holes is, the higher a silencing band is; and the thicker the perforated plate is, the lower a silencing band is.

As shown in a region A and a region B in FIG. 9, after sound enters the silencing cavity 34 through the perforated plate 31, when the sound is propagated for reflection and refraction between the outer wall 32 of the silencing cavity 34 and the perforated plate 31, silencing is achieved by the superposition of incident sound waves and reflected sound waves. When superposition phases of the incident sound waves and the reflected sound waves differ by 180 degrees, the maximum silencing effect can be achieved. Therefore, reasonable control over the radial depth and the axial depth of the silencing cavity will affect a silencing effect.

In some embodiments, after the sound enters the silencing cavity 34, sound waves can be propagated and reflected in the axial and radial directions of the silencing cavity 34, and thus superposed, such that the total energy of the sound is attenuated to achieve a silencing effect. As shown in the region B in FIG. 9, the radial reflection-induced silencing link and a perforated filtering-induced silencing are interrelated, which can better achieve silencing within a band of approximately 3000 Hz-8000 Hz. It is experimentally verified that the noise within a band of 3000 Hz-8000 Hz can be effectively eliminated when the radial depth of the silencing cavity is at least 3 mm but not more than 15 mm. Optionally, the radial depth is 5 mm, 8 mm, 10 mm, 12 mm, etc.

However, medium- and low-frequency noise below 3000 Hz cannot be eliminated through the above radial depth. The medium- and low-frequency noise below 3000 Hz can be eliminated by reasonably controlling axial depth parameters through the axial reflection-induced silencing. As shown in the region A in FIG. 9, the sound is reflected and refracted by the outer wall 32 of the silencing cavity, the perforated plate 31, and the bottom surface of the silencing cavity to form a mutually superimposed propagation mode approximately along the axial direction of the silencing cavity. The medium- and low-frequency noise below approximately 3000 Hz can be well eliminated. It is experimentally verified that the medium- and low-frequency noise below 3000 Hz can be effectively eliminated when the axial depth of the silencing cavity is at least 20 mm but not more than 120 mm. For example, noise within a band of at least 500 Hz but not more than 3200 Hz or at least 1000 Hz but not more than 3000 Hz can be eliminated. Optionally, the axial depth is at least 25 mm but not more than 80 mm, such as 40 mm, 50 mm, 60 mm, 70 mm, etc.

As mentioned above, sound waves are subjected to radial silencing and axial silencing through the perforated silencing cavity. After multiple superimposed silencing, the total energy of the sound within a specific band (e.g., 500 Hz -8000 Hz) is attenuated, achieving a final silencing effect jointly.

When an operating speed of the fan is in a range of at least 70000 r/min but not more than 90000 r/min, for example, when the operating speed is 72000 r/min, the sound frequency corresponding to the rotation of the fan approximately is in a range of at least 1150 Hz but not more than 3200 Hz, which may be calculated in the following way:
the sound frequency corresponding to the speed = shaft frequency = operating frequency. For example, when the operating speed is 72000 r/min, the calculation process is as follows: 72000/60 = 1333 r/s = 1200 Hz, which belongs to medium and low frequencies.

When the operating speed of the fan is within other ranges, noise within a higher-frequency range can be produced. In the conventional power assembly, the noise of the fan is basically within a range of at least 500 Hz but not more than 8000 Hz, so the silencing cavity in the present application can cover all the operating speed ranges of the conventional fan.

It is experimentally verified that when medium- and low-frequency noise below 3000 Hz is to be eliminated through the thickness of the perforated plate, the density of the holes, the diameters of the holes or the radial size of the silencing cavity, the following conditions must be met.

Firstly, the diameters of holes and the density of holes jointly affect a total area proportion of holes in the perforated plate per unit area. To achieve silencing within a lower band, the diameters of the holes must not be too large. Meanwhile, the density of holes should be very sparse, and a total hole area proportion should not be more than 3%. However, such parameter settings will seriously affect the fluency of the air channels of the power assembly, so that the main function (negative pressure performance) of the fan will be adversely affected. Therefore, the medium- and low-frequency noise below 3000 Hz cannot be eliminated through conventional hole diameters and hole density.

Secondly, to eliminate medium- and low-frequency noise below 3000 Hz, the radial size of the silencing cavity needs to be more than 20 mm, which will lead to too large radial size of the silencing hood, so that a peripheral diameter of the power assembly is too large to be suitable for home handheld devices. Therefore, the medium- and low-frequency noise below 3000 Hz cannot be eliminated through the conventional radial size.

Thirdly, to eliminate medium- and low-frequency noise below 3000 Hz, the thickness of the perforated plate needs to be at least 7 mm thick. However, the perforated plate that is too thick cannot be molded by injection molding, because the cylindrical perforated plate with uniform hole diameter needs to be achieved. When the thickness of the perforated plate is greater than 7 mm, the manufacturing difficulty is high. In addition, the perforated plate that is too thick will also increase the weight of the silencing hood, which in turn increases the weight of the power assembly, thereby affecting the user experience. Therefore, the medium- and low-frequency noise below 3000 Hz cannot be eliminated through the perforated plate having conventional thickness.

It can be seen that the main parameters that affect the silencing effect in the above silencing hood can only eliminate noise of at least 3000 but not more than 8000 Hz due to the limitations of practical application. Therefore, in order to take into account diverse requirements of smooth working airflow, the size of the power assembly and the reduction of the manufacturing process, various parameters of the perforated plate in the embodiment of the present application are configured as follows: the diameter of each hole in the perforated plate is at least 1 mm but not more than 5 mm, optionally, e.g., 2 mm or 3 mm. The quantity of the holes in the perforated plate is at least 100 but not more than 1400, optionally, e.g., 1058 or 1200. A distance between the perforated plate and the central axis of the silencing hood is at least 20 mm but not more than 55 mm, optionally, e.g., 30 mm, 37 mm or 45 mm. The thickness of the perforated plate is at least 1 mm but not more than 4 mm, optionally, e.g., 1.5 mm, 2 mm or 3 mm. In summary, the silencing hood in the embodiment of the present application is defined by the above parameters, and can effectively eliminate noise of at least 3000 Hz but not more than 8000Hz without affecting practical applications and processing technologies of the silencing hood.

Regarding the limitations of parameter adjustment for filtering-induced silencing and radial reflection-induced silencing of the silencing hood in practical applications, noise of approximately 500-8000 Hz can be eliminated in combination with the axial depth parameters that can eliminate noise of at least 500 but not more than 3200 Hz.

As shown in a region C in FIG. 9, when the working airflow circulates up and down along the inner wall of the perforated plate 31, the sound is reflected and refracted by the perforated plate 31 and the bottom surface of the housing, forming a mutually superposed propagation mode approximately along the axial direction of the perforated plate 31. In this way, the axial silencing in the silencing cavity can be compensated, and medium- and low-frequency noise below approximately 3000 Hz can be well eliminated. It is experimentally verified that there is a compensation effect on the elimination of the medium- and low-frequency noise below 3000 Hz when the axial height of the perforated plate 31 is at least 20 mm but not more than 120 mm. For example, noise within a band of at least 500 Hz but not more than 3200 Hz or at least 1000 Hz but not more than 3000 Hz can be eliminated. Optionally, the axial height is at least 25 mm but not more than 80 mm, such as 40 mm, 50 mm, 60 mm, or 70 mm.

The power assembly according to the embodiment of the present application is provided with a silencing cavity. The silencing cavity has an axial depth and a radial depth. The radial depth is configured to eliminate noise within the first frequency range, e.g., noise within a range of at least 3000 Hz but not more than 8000 Hz, and in combination with the parameters such as the diameters of holes, the quantity of holes and the thickness of the perforated plate, further eliminate noise within a range of at least 3000 Hz but not more than 8000 Hz. Meanwhile, the silencing cavity has an axial depth of at least 20 mm but not more than 120 mm. The axial depth is configured to eliminate noise within the second frequency range, e.g., noise within a range of 500-3000 Hz. Therefore, the silencing cavity in the present application can achieve a silencing effect within a range of 500-8000 Hz through the combination of axial silencing and radial silencing, covering the noise frequency of the existing household handheld device.

Finally, it should be noted that various embodiments in the present description are described in a progressive manner, each embodiment focuses on the differences from other embodiments, and respective embodiments may be mutually referred to for the same or similar parts among these embodiments.

The above embodiments are merely used to illustrate the technical solutions of the present application, but are not limited thereto. Although the present application is described in detail with reference to the above embodiments, a person of ordinary skill in the art should understand: the technical solutions described in the foregoing embodiments may still be modified, or some of the technical features may be equivalently substituted. However, these modifications and substitutions do not make the corresponding technical solutions essentially departing from the spirit and scope of the technical solutions in the embodiments of the present application.

## Claims

1. A power assembly, comprising:
a power source, configured to provide fluid power; and
a silencing cavity, arranged around the power source, the silencing cavity having an axial depth and a radial depth, wherein the radial depth is configured to eliminate noise within a first frequency range, and the axial depth is configured to eliminate noise within a second frequency range; and
wherein the axial depth is at least 20 mm but not more than 120 mm.

2. The power assembly according to claim 1, wherein the power assembly further comprises:
a silencing hood, arranged around the power source, the silencing hood comprising a perforated plate and an outer wall, wherein the silencing cavity is located between the perforated plate and the outer wall.

3. The power assembly according to claim 2, wherein a diameter of each hole in the perforated plate is at least 1 mm but not more than 5 mm.

4. The power assembly according to claim 2, wherein the quantity of holes in the perforated plate is at least 100 but not more than 1400.

5. The power assembly according to claim 2, wherein a distance between the perforated plate and a central axis of the silencing hood is at least 20 mm but not more than 55 mm.

6. The power assembly according to claim 2, wherein the thickness of the perforated plate is at least 1 mm but not more than 4 mm.

7. The power assembly according to claim 1, wherein a radial depth of the silencing cavity is at least 3 mm but not more than 15 mm.

8. The power assembly according to claim 1, wherein a cross section of the silencing cavity is of a U-shaped structure.

9. The power assembly according to claim 8, wherein the bottom of the U-shaped structure has no silencing holes.

10. The power assembly according to claim 2, wherein the silencing hood further comprises:
an assembling bracket, arranged on the inner side of the perforated plate, and configured to fix the silencing hood through the assembling bracket.

11. The power assembly according to claim 1, wherein the first frequency range is at least 3000 Hz but not more than 8000 Hz, and the second frequency range is at least 500 Hz but not more than 3200 Hz.

12. The power assembly according to claim 1, wherein a rotating speed of the power source is at least 70000 r/min but not more than 90000 r/min.

13. The power assembly according to claim 2, wherein a plurality of holes in the perforated plate is evenly distributed in the perforated plate.

14. A surface cleaning device, comprising the power assembly according to any one of claims 1 to 13.
